# EUROPEAN PATENT SPECIFICATION

(11) **EP 1 591 327 B1**
(45) Date of publication and mention of the grant of the patent: **07.11.2007**
(21) Application number: 04010030.7
(22) Date of filing: 28.04.2004
(51) Int. Cl.: B60R 22/02, B60R 22/14, B60R 22/10, B60R 22/22

(54) **Vehicle seat belt arrangement**
Fahrzeug-Sicherheitsgurtanordnung
Agencement de ceinture de sécurité pour d'un véhicule

(43) Date of publication of application: 02.11.2005
(73) Proprietor: Ford Global Technologies, LLC, Dearborn, MI 48126 (US)
(72) Inventor: Kvarnstrand, Laura, 56691 Habo (SE)
(74) Representative: Bergquist, Kjell Gunnar

(56) References cited:
- US-A- 5 076 608
- US-A1- 2004 070 191
- PATENT ABSTRACTS OF JAPAN vol. 2003, no. 11, 5 November 2003 (2003-11-05) & JP 2003 200815 A (TAGAMI MAYUMI), 15 July 2003 (2003-07-15)
- PATENT ABSTRACTS OF JAPAN vol. 2003, no. 12, 5 December 2003 (2003-12-05) & JP 2003 226224 A (MODEII:KK), 12 August 2003 (2003-08-12)

## Description

### TECHNICAL FIELD:

The present invention relates to a vehicle seat belt arrangement comprising a belt webbing defining a torso belt section having a first end portion arranged in a spool and a second end portion, said belt webbing also defining a thigh belt section having a first end portion arranged in a spool and a second end portion.

### BACKGROUND ART:

In the field of motor vehicles, for example cars, seat belts are used for protecting the occupants of vehicles in case of collisions and similar situations involving very high loads due to impact forces acting on the vehicle.

In order to obtain a high degree of safety for the occupants of a vehicle, so-called three-point seat belts have been used for many years. The three-point seat belt comprises a webbing which defines a torso belt section and a lap belt section. The lap belt section works by loading the left and right sides of the pelvis during a collision. However, this is only achieved if the lap belt section rides low enough on the pelvis in order to be "hooked" by the right and left iliac crests which are situated on the pelvis. Consequently, proper belt placement is essential in order to assure correct pelvic loading and protection of the soft abdominal tissue of the occupant.

For occupants using the convential three-point belt, there is a risk for the so-called "submarining" situation, wherein the function of the lap belt portion fails in a manner so that it rides up to a position over the pelvis during a collision. As a consequence, there is a risk for serious injury of the internal abdominal organs of the occupant. The risk for submarining exists both for adults and children.

In adults, submarining may occur as a result of many scenarios. For example, the lap belt section may give rise to too much slack due to bulky clothing or improper positioning by the occupant. Also, the lap belt section may ride above the pelvis due to a reclined seatback or because the occupant has positioned the lap belt section too high, not understanding its function. Even if the lap belt section may be properly positioned just before a crash, it is still possible that it may move over the top of the pelvis and cause submarining during a crash.

As regards children, the pelvis does not have well defined iliac crests until the child reaches puberty. Furthermore, although it is normally recommended that children ride in booster cushions (which provide special belt placement in order to reduce the risk of submarining) until they are about eight years old, there are children past that age who still have poorly definied iliac crests. It can be assumed that these children have a risk of submarining in the event of a vehicle collision or the like.

Furthermore, in the case of the pregnant woman, it can be assumed that there is a particularly high risk for submarining. The lap belt section, even when properly positioned, sits at a relatively great distance from the pregnant woman's iliac crests Within this distance, the unborn baby is positioned. In order for the lap belt section to make contact with the pelvis and absorb an impact force, the lap belt section must first compress the baby and the uterus. This may inflict serious injury risk both for the baby and the mother in the event of a crash, especially if the belt raises over the iliac crests.

There are previously known seat belt arrangements which aim at providing a high degree of safety for the occupants of a vehicle. In particular, there has been proposed to use a thigh belt section which acts to restrain the occupant by imposing a load upon the thighs of the occupant. The patent document US 5076608 discloses a seat belt system which comprises a combination of a conventional shoulder belt section and lap belt section, and additionally also a thigh belt section.

Although the system according to US 5076608 uses a thigh belt section, it should be noted that this system still presents a problem in that it comprises a lap belt section, and that such a lap belt section may direct a high force upon an unborn baby and its uterus at impact during a collision. Furthermore, the system according to US 5076608 has a relativelty complicated design with its three belt sections and other components for positioning the three belt sections in a correct manner.

Furthermore, and in addition to the above-mentioned problems associated with the system according to US 5076608, there is still a great demand for further improvements in the field of protective arrangements for the occupants of vehicles.

### DISCLOSURE OF INVENTION:

An object of the present invention is to provide an improved seat belt system which generally provides an increased degree of safety, in particular but not exclusively for pregnant women and their unborn children, and in which the above-mentioned drawbacks associated with the system according to US 5076608 can be overcome.

In accordance with the invention, this object is accomplished by means of an arrangement as mentioned initially, which arrangement is characterized in that said second end portions are connected via a distancer element which during use extends generally in the longitudinal direction of said vehicle, thereby maintaining said second end portion of the torso belt section at a predetermined distance from said second end portion of the thigh belt section.

By means of the invention, certain advantages are provided. Firstly, due to the fact that a lap belt is avoided and that the above-mentioned second end portions of the torso and thigh belt sections are separated by means of a distancer element, the thigh belt section will be positioned in a manner which restrains the user and provides a very high degree of safety for the user, while still maintaing the torso belt section in a position for correct load distribution of the human torso during a collision. It can be shown that, in the case where the user is a pregnant woman, deformation of the unborn baby is significantly reduced when using the present invention, as compared to tests using the conventional three-point seat belt.

The invention also constitutes a relatively simple solution with few details and which allows for easy, one-hand manual buckling and unbuckling.

### BRIEF DESCRIPTION OF DRAWINGS:

In the following text, the invention will be described in detail with reference to the attached drawings. These drawings are used for illustration only and do not in any way limit the scope of the invention. In the drawings:
- Fig. 1a: is a schematical drawing intended to illustrate the problem on which the invention is based, with particular reference to prior art;
- Fig. 1b: is a schematical drawing corresponding essentially to Fig. 1a but showing the principles on which the present invention is based;
- Fig. 2: is a side view showing a first embodiment of the present invention;
- Fig. 3: is a perspective view of a seat belt buckle arrangement according to said first embodiment;
- Fig. 4: is a perspective view of an arrangement for displacing the attachment points of a thigh belt section, in accordance with the first embodiment;
- Fig. 5: is a side view of a second embodiment of the invention; and
- Fig. 6: is a view of a distancer element according to the second embodiment.

### PREFERRED EMBODIMENTS:

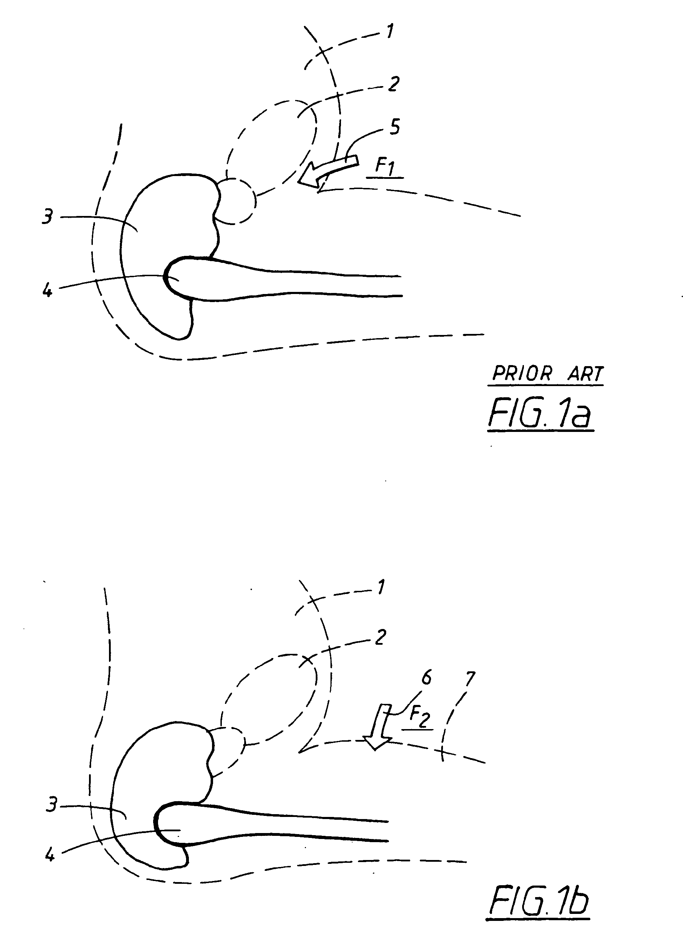

In the following, certain embodiments of the present invention will be described in detail with reference to the appended drawings. However, with reference to Figs. 1a and 1b, the basic principles of the invention are first explained. In Figs. 1a and 1b, a vehicle occupant in the form of a pregnant woman 1 is shown. The forces acting upon said occupant 1 in case of a collision are illustrated in order to explain the basic principles of the invention. Firstly, in Fig. 1a there is shown a side view of the pregnant woman 1 (indicated by means of broken lines) with an unborn child 2. Also, the pelvis 3 and the right femur 4 of the occupant 1 are indicated in the drawing. According to Fig. 1a, which represents prior art in which a conventional three-point belt is used, a force is acting in a direction towards the pelvis 3 as a result of the use of the three-point belt with its lap belt section (not shown). In other words, the fact that a conventional lap belt section is used, a force F₁ is generated as indicated by means of an arrow 5 in Fig. 1a.

Obviously, due to the fact that a conventional three-point belt is used, there will also be a force acting on the chest of the occupant 1, since the belt comprises a torso belt section (not shown). However, for reasons of simplicity, this force is not shown in Figs. 1a and 1b.

It is known that during a vehicle collision, the force acting on the pelvis 3 at the time of impact is considerably larger than the force which acts on the chest and shoulder of an occupant as a result of the torso belt section. Such a force distribution is not ideal if the occupant is a pregnant woman. In fact, as indicated in Fig. 1a, and as explained initially, it can be noted that the force F₁ acting towards the pelvis 3 may cause injury to the woman 1 and the child 2, due to the fact that the child 2 is at least partly positioned right between the impact point of the force F₁ and the position of the pelvis 3. In fact, the force F₁ will be transferred through the tummy of the woman 1 and act upon the child 3 and the uterus (not shown) as the force makes its way to its loading target, i.e. the left and right iliac crests of the pelvis. This may in turn lead to injuries, especially if the belt raises above and misses the iliac crests and submarining occurs.

Fig. 1b indicates the general principle on which the present invention is based. An important feature of the invention is that it lacks the above-mentioned lap belt section, which means that the above-mentioned force F₁, which may act upon the woman 1 and child 3 in a negative manner, is eliminated. Instead, the invention is arranged so that another restraining force F₂, indicated by means of an arrow 6 in Fig. 1b, acts upon the upper side of the woman's 1 thighs 7. This is accomplished by means of a seat belt arrangement comprising a thigh belt section, as will be described below. Certain embodiments for carrying out this principle by means of a thigh belt section will be described in detail. Due to the fact that the woman 1 is restrained by said force F₂ acting on the thighs instead of the pelvis, the risk for injury on the woman 1 and child 3 which may occur in the case of the prior art can be avoided.

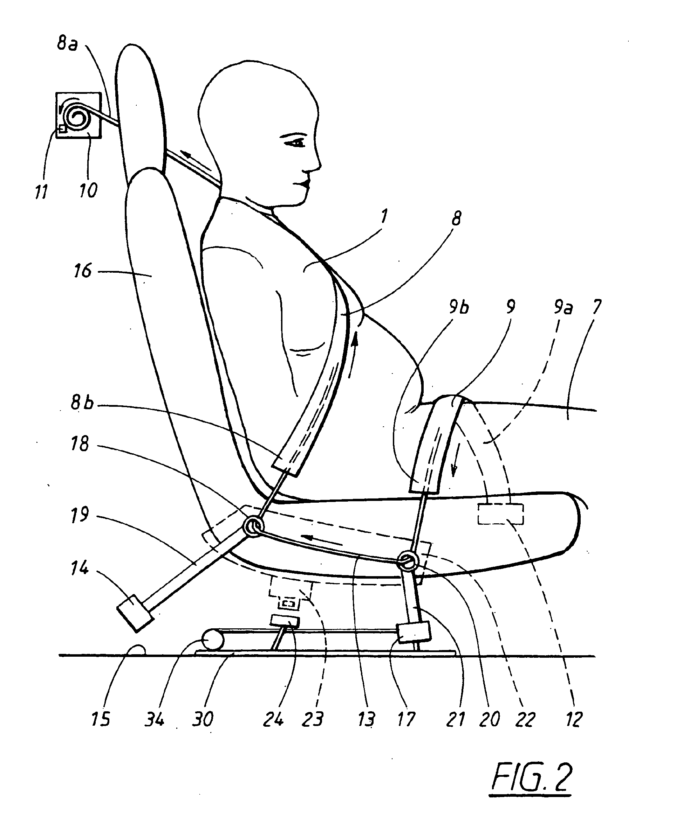

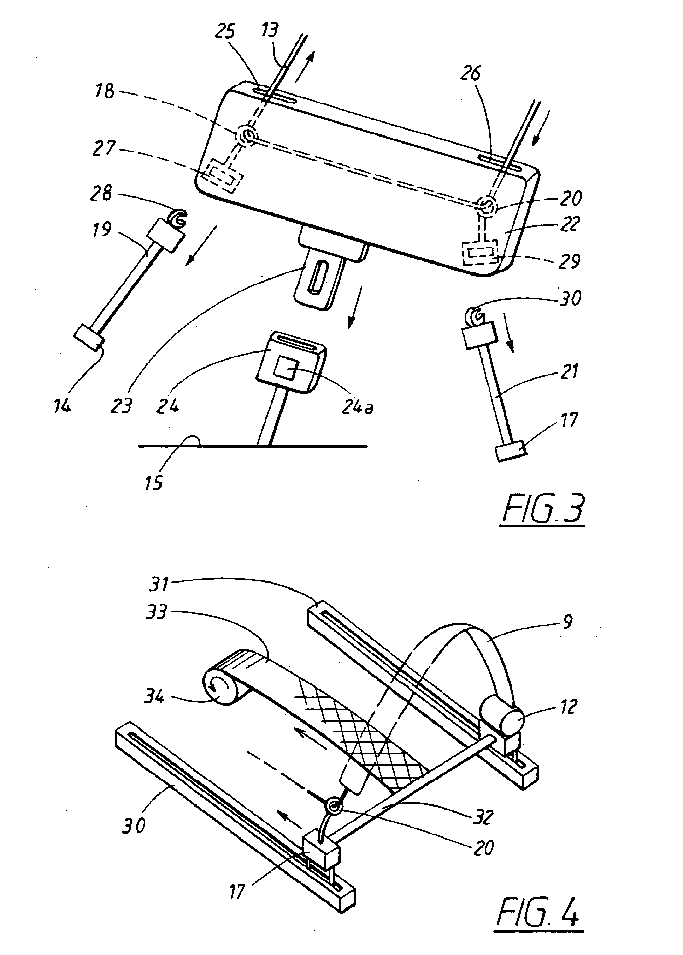

A first embodiment of the invention, using the above-mentioned principles according to Fig. 1b with a restraining force F₂ acting on the thighs 7, will now be described with reference to Fig. 2. In Fig. 2, a pregnant woman 1 is using a seat belt arrangement designed in accordance with the invention. In this regard, it should be noted that Fig. 2 indicates the invention in a principal manner and slightly simplified manner and that it will be described in further detail below with reference to Figs. 3 and 4. At this stage, it should also be noted that the seat belt arrangement according to the invention is not limited to be used by pregnant women only, but is equally useful for protecting all kinds of occupants, i.e. children and adults.

As indicated in Fig. 2, the seat belt arrangement comprises a webbing forming a torso belt section 8 and a thigh belt section 9. The torso belt section 8 extends from a spool 10 in a generally conventional manner, i.e. arranged in the vicinity of the occupant's 1 shoulder section. Preferably, the spool 10 is provided with a pretensioner 11, which is a device which is known per se and which is arranged so as to cause a certain amount of tension on the torso belt section 8 in the event of a collision. Such a condition of the vehicle is detected in a manner which is also known, i.e. by means of a crash sensor (not shown) arranged in the vehicle. Also, the spool 10 may be provided with a load limiter (not shown) which limits the amount of force that the body experiences under belt loading.

Furthermore, the thigh belt section 9 is connected to a further spool 12, which preferably also comprises a pretensioner (not shown) of the same type as the pretensioner 11 in the spool 10 for the torso belt section 8.

Consequently, the torso belt section 8 can be said to comprise a first end portion 8a arranged in the spool 10 and also a second end portion 8b. In a similar manner, the thigh belt section 9 can be said to comprise a first end portion 9a arranged in a spool 12 and a second end portion 9b.

It is an important feature of the invention that the torso belt section 8 and the thigh belt section 9 are connected to each other. More precisely, the end second portions 8b, 9b of the torso belt section 8 and thigh belt section 9 are connected to each other via a distancer element 13. By means of the distancer element 13, the second end portions 8b, 9b will be separated along the longitudinal direction of the vehicle. Also, by means of the distancer element 13, any occurring tightening of the torso belt section 8 will cause a corresponding tightening of the thigh belt section 9.

According to the embodiment shown in Fig. 2, the distancer element 13 can be in the form of a wire, or a cable, which connects the corresponding end portions 8b, 9b of the torso belt section 8 and thigh belt section 9, respectively. To this end, the wire 13 is suitably sewn (or fastened in another similar manner) into the end portions 8b, 9b of the torso belt section 8 and thigh belt section 9, respectively, as indicated with broken lines in Fig. 2. Alternatively, the cable could be built into the full length of the webbing and could then only be free from the webbing at the distancer.

In order to obtain correct positioning of the torso belt section 8 and the thigh belt section 9, respectively, there is provided a first attachment point 14 located close to, or on, the floor 15 of the vehicle. The first attachment point 14 is generally located close to the rear portion of a vehicle seat 16 in which the occupant 1 is positioned. Alternatively, the first attachment point could be integrated into the seat 16. Furthermore, a second attachment point 17 is provided dose to the front portion of the seat 16. In a manner which will be described in detail below and also with reference to Fig. 4, the second attachment point 17 is displaceable in a direction which is generally parallel to the longitudinal extension of the vehicle. In particular, the second attachment point 17 is primarily intended to be displaced in a direction towards the rear of the vehicle in order to impose a slight force upon the thigh belt section 9 so that it rides on top of the thighs 7, in a position which is close to the woman's 1 tummy.

The purpose of the first attachment point 14 is to define a fixing point for a first generally loop-shaped element 18, which is connected to the first attachment point 14 via a first link element 19. In a similar manner, the second attachment point 17 forms a fixing point for a second loop-shaped element 20 which is connected to the second attachment point 17 via a second link element 21. Furthermore, the distancer element 13, being a wire according to this first embodiment, extends through both loop-shaped elements 18, 20 without being fixed, in a manner as shown in Fig. 2.

Preferably, the wire 13 and the loop-shaped elements 18, 20 are accommodated within a housing, which is indicated by means of broken lines and reference numeral 22 in Fig. 2. One purpose of the housing 22 is to form a single unit for grabbing and locking by the occupant 1 when the seat belt is intended to be used. To this end, the housing 22 comprises a seat belt buckle 23 of generally conventional type, which is intended to be locked to a user's manual connection site 24 located close to, and anchored to, the floor 15 of the vehicle.

With further reference to Fig. 3, which is an enlarged and more detailed perspective view of the housing 22, it can be noted that the loop-shaped elements 18, 20 are arranged inside the housing 22 and that the wire 13 is partly inside the housing 22 in order to extend through said loop-shaped elements 18, 20. To this end, the upper side of the housing 22 is provided with slits or similar openings 25, 26 for allowing correct positioning of the wire 13 inside the housing 22.

An important feature of the embodiment described in Fig. 3 is that it allows for a single manual, one-grip buckling of the entire seat belt arrangement. In order to accomplish this, the housing 22 is provided with a first lock element 27 for connection with the first link element 19, via a first latch element 28 on said first link element 19. In a similar manner, the housing 22 is also provided with a second lock element 29 for connection with the second link element 21 via a second latch element 30. As mentioned above, the housing is also provided with a seat belt buckle 23 for engaging in a connection site 24 anchored to the vehicle's floor 15.

The seat belt buckle 23, the connection site 24, the housing 22 and its parts, and the link elements 19, 21 are preferably dimensioned and positioned so that the entire locking operation, i.e. involving locking the seat belt buckle 23 and the two lock elements 27, 29, is carried out by the user by means of one single, one-hand operation. This leads to a simple and user-friendly operation of the seat belt arrangement according to the invention. Preferably, the seat belt buckle 23, the lock elements 27, 28 and the latch elements 28, 30 are arranged so that the entire unlocking of all said elements is carried out by pressing on one single button 24a on said connection site 24.

As mentioned above with reference to Fig. 1, and as will be described now with reference to Fig. 4, the second attachment point 17 and the thigh belt spool 12 are displaceable in a manner so as to force the thigh belt section 9 in a rearwards direction in the vehicle with a light pressure. The purpose of this is to gently force the thigh belt section 9 to a correct position close to the woman's 1 tummy, on the upper side of her thighs 7. As shown in Fig. 4, the displacement of the second attachment point 17 is provided by arranging it in a first linear displacement track 30 extending generally along the longitudinal direction of the vehicle. In a similar manner, the thigh belt spool 12 is arranged in a second linear displacement track 31 also extending generally in the longitudinal direction of the vehicle.

Even if Fig. 2 only shows the first linear displacement track 30, it should be noted that the embodiment shown in Fig. 2 includes the entire arrangement according to Fig. 4.

With further reference to Fig. 4, the second attachment point 17 and the thigh belt spool 12 are connected by means of a rod 32, in which the end portion of a belt webbing 33 is attached. The webbing 33 cooperates with a further spool 34 which is spring-biased so as to exert a relatively light force on the thigh belt 9 in a direction as shown by means of an arrow in Fig. 4. In this manner, the thigh belt portion 9 will be gently forced rearwards so as to assure that it extends over the thighs 7 in a position close to the woman's 1 tummy. This means that a the thigh belt section 9 will assume a correct position so that a very high degree of safety can be provided in the event of a collision.

Preferably, the displacement tracks 30, 31 are positioned and fastened in a recessed space in the metal bodywork which constitutes the floor of the vehicle.

In summary, an important feature of the invention is that a conventional lap belt section can be avoided and that the end portions 8b, 9b (cf. Fig. 2) of the torso and thigh belt sections are separated in the lengthwise direction of the vehicle. This means that the thigh belt is positioned slightly forward of an assumed position of a conventional lap belt section, while the torso belt section is still maintained in a position which is optimal for correct load distribution of the human torso during a collision. In particular, the end portions 8b, 9b of the torso and thigh belt sections are separated, yet still connected, by means of the above-mentioned distancer element 13.

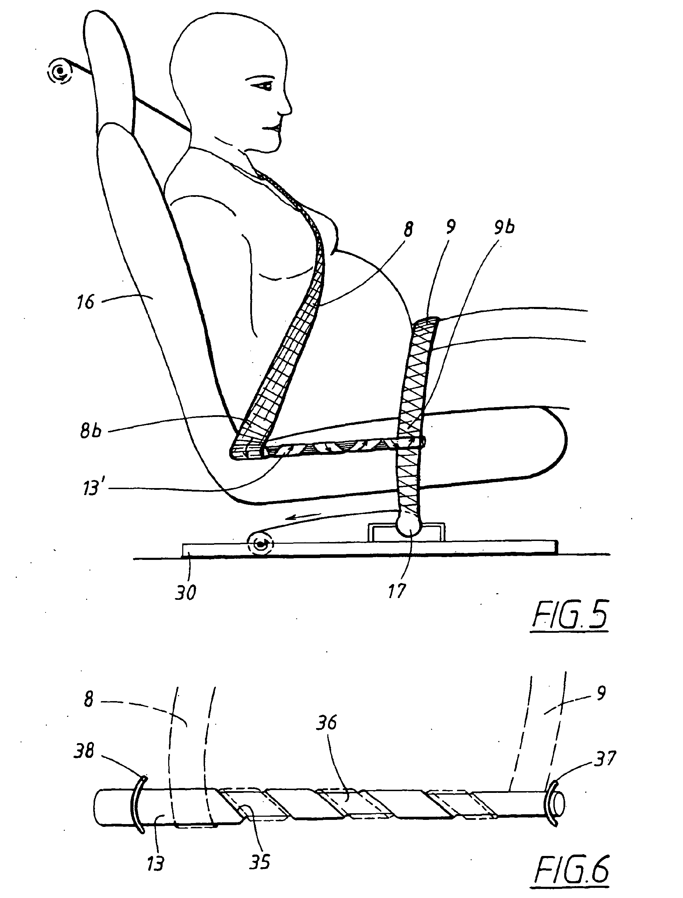

In Fig. 5, a second embodiment of the invention is shown in a schematical and slightly simplified manner. In a manner which is analog to the first embodiment described above, the second embodiment is based on the principle that a torso belt section 8 and a thigh belt section 9 are used. Furthermore, the torso belt section 8 and a thigh belt section 9 are connected by means of a distancer element 13', which according to the second embodiment is constituted by a translator rod having a generally cylindrical shape and extending along the side of the vehicle seat 16. As shown in greater detail in Fig. 6, the translator rod 13' is formed with a generally helically shaped groove 35 along which a belt webbing 36 is wound, said belt webbing 35 joining the end portions 8b, 9b of the torso belt section 8 and the thigh belt section 9. This means that the torso belt section 8 meets the thigh belt section 9 on this translator rod 13'. In a manner which is similar to the embodiment shown in Fig. 2, the end portions 8b, 9b of the torso belt section 8 and the thigh belt section 9, respectively, are separated so as to allow the thigh belt 8 to ride in a correct and safe manner on the upper side of the woman's 1 thighs 7.

Fig. 6 shows the translator rod 13' slightly enlarged. As indicated, the belt webbing extends in a helical manner around the translator rod 13'. Furthermore, the translator rod 13' is attached to the seat 16 by means of suitable attachment elements 37, 38. The translator rod 13' can be arranged in a fixed manner, but can also be arranged in rotatable manner. Also, the translator rod 13' can be arranged so as to be telescopically contractible and extendable, so that the thigh belt section 9 and torso belt section 8 can be easily displaced in relation to each other.

Preferably, although not shown in Fig. 5 or Fig. 6 the translator rod 13' can also be provided with a housing of the same type as the first embodiment shown in Figs. 2-4. This means that similar locking elements as described above can be provided in order to buckle and unbuckle the housing by a user. Furthermore, an arrangement as shown in Fig. 4 for displacing the thigh belt section 9 is preferably also provided in the embodiment shown in Fig. 5.

With reference to Fig. 2, it should be noted that the positioning of the first attachment point 14 is chosen so that the torso belt section 8 extends between the breasts of the occupant 1 (assuming the occupant 1 is female) and also to the side of the pregnant belly. Alternatively, however, the positioning of the first attachment point 14 can be chosen so that the torso belt section 8 extends higher up, i.e. above the breasts of the occupant 1, which can be regarded as providing a high degree of safety. In the embodiment shown in Fig. 5, this alternative solution may require a slightly different design and extension of the translator rod 13' so as to force the torso belt section 8 to extend above the woman's breasts 1.

The invention is not limited to the embodiment described, but can be modified within the scope of the appended claims. For example, the invention is not limited to use for pregnant women, but provides a high degree of safety for all kinds of occupants.

With reference to the arrangement shown in Fig. 4, it should be noted that the invention can be implemented even without such means for displacing the thigh belt section 9 towards its correct position (i.e. the tracks 30, 31, the webbing 33 and the spool 34). However, if such an arrangement is lacking, it would be particularly important that the user positions the thigh belt section in a correct manner manually.

Also, the inventive concept is fulfilled even if the pretensioners for the torso and thigh belt sections are excluded. Furthermore, the spool 10 for the torso belt section 8 can alternatively be of the type which is built-in into the back support of the seat 16.

Finally, the present invention is not limited to use in cars but is also suitable for other types of vehicles, such as trucks and buses.

## Claims

1. Vehicle seat belt arrangement comprising a belt webbing defining a torso belt section (8) having a first end portion (8a) arranged in a spool (10) and a second end portion (8b), said belt webbing also defining a thigh belt section (9) having a first end portion (9a) arranged in a spool (12) and a second end portion (9b), **characterized in that** said belt webbing consists only of said torso belt section (8) and said thigh belt section (9), and that said second end portions (8b, 9b) are connected via a distancer element (13; 13') which during use extends generally in the longitudinal direction of said vehicle, thereby maintaining said second end portion (8b) of the torso belt section (8) at a predetermined distance from said second end portion (9b) of the thigh belt section (9).

2. Vehicle seat belt arrangement according to claim 1, **characterized in that** said distancer element (13) is constituted by a wire (13) being attached to said second end portion (8b) of the torso belt section (8) and said second end portion (9b) of the thigh belt section (9),

3. Vehicle seat belt arrangement according to claim 2, **characterized in that** said wire (13) extends through a first generally loop-shaped element (18) defining the positioning for said second end portion (8b) of the torso belt section (8) and through a second generally loop-shaped element (20) defining the positioning for said second end portion (9b) of the thigh belt section (9).

4. Vehicle seat belt arrangement according to claim 1, **characterized in that** said distancer element (13') is constituted by a translator rod (13') having a generally helical groove (35) for accommodating a webbing element (36) joining said second end portion (8b) of the torso belt section (8) and said second end portion (9b) of the thigh belt section (9).

5. Vehicle seat belt arrangement according to any one of the preceding claims, **characterized in that** it comprises means (33, 34, 32) for exerting a force upon said thigh belt section (9) for positioning thereof generally on the upper side of the thighs (7) of a user (1), close to the user's (1) tummy.

6. Vehicle seat belt arrangement according claim 5, **characterized in that** said means (33, 34, 32) comprises a belt webbing (33) being connected to said thigh belt section (9) and a spring-biased belt webbing spool (34) for urging said thigh belt section (9) in a generally rearwards direction in said vehicle.

7. Vehicle seat belt arrangement according to any one of the preceding claims, **characterized in that** it comprises a housing (22) for accommodating said distancer element (13; 13'), said housing (22) comprising a seat belt buckle (23) for locking to a connection site (24) arranged in said vehicle.

8. Vehicle seat belt arrangement according to any one of the preceding claims, **characterized in that** the spool (10) for the torso belt section (8) and/or the spool (12) for the thigh belt section (9) comprises a pretensioning device for exerting a restraining force in the event of a collision-like condition of said vehicle.

## Patentansprüche

1. Fahrzeug-Sicherheitsgurtanordnung mit einem Gurtband, das einen Rumpfgurtabschnitt(8) definiert, welcher einen ersten Endabschnitt (8a), der in einer Spule (10) angeordnet ist, und einen zweiten Endabschnitt (8b) aufweist, wobei das Gurtband auch einen Schenkelgurtabschnitt (9) definiert, welcher einen ersten Endabschnitt (9a), der in einer Spule (12) angeordnet ist, und einen zweiten Endabschnitt (9b) aufweist,
**dadurch gekennzeichnet, dass** das Gurtband lediglich aus dem Rumpfgurtabschnitt (8) und dem Schenkelgurtabschnitt (9) besteht, und dass die zweiten Endabschnitte (8b, 9b) über ein Distanzelement (13; 13') verbunden sind, welches sich während der Verwendung im Allgemeinen in der Längsrichtung des Fahrzeugs erstreckt, wodurch der zweite Endabschnitt (8b) des Rumpfgurtabschnitts (8) in einem vorbestimmten Abstand von dem zweiten Endabschnitt (9b) des Schenkelgurtabschnitts (9) gehalten wird.

2. Fahrzeug-Sicherheitsgurtanordnung nach Anspruch 1, **dadurch gekennzeichnet, dass** das Distanzelement (13) durch einen Draht (13) gebildet wird, der an dem zweiten Endabschnitt (8b) des Rumpfgurtabschnitts (8) und dem zweiten Endabschnitt (9b) des Schenkelgurtabschnitts (9) angebracht ist.

3. Fahrzeug-Sicherheitsgurtanordnung nach Anspruch 2, **dadurch gekennzeichnet, dass** sich der Draht (13) durch ein erstes im Allgemeinen schlaufenförmiges Element (18) erstreckt, wobei die Positionierung für den zweiten Endabschnitt (8b) des Rumpfgurtabschnitts (8) definiert wird, und durch ein zweites im Allgemeinen schlaufenförmiges Element (20), wobei die Positionierung für den zweiten Endabschnitt (9b) des Schenkelgurtabschnitts (9) definiert wird.

4. Fahrzeug-Sicherheitsgurtanordnung nach Anspruch 1, **dadurch gekennzeichnet, dass** das Distanzelement (13') durch einen Übertragungsstab (13') gebildet wird, der eine im Allgemeinen spiralförmige Nut (35) zum Aufnehmen eines Bandelements (36) aufweist, das den zweiten Endabschnitt (8b) des Rumpfgurtabschnitts (8) und den zweiten Endabschnitt (9b) des Schenkelgurtabschnitts (9) zusammenfügt.

5. Fahrzeug-Sicherheitsgurtanordnung nach einem der vorhergehenden Ansprüche, **dadurch gekennzeichnet, dass** sie eine Einrichtung (33, 34, 32) umfasst, zum Ausüben einer Kraft auf den Schenkelgurtabschnitt (9) zum Positionieren von ihm im Allgemeinen an der Oberseite der Schenkel (7) von einem Nutzer (1), nahe an dem Bauch des Nutzers (1).

6. Fahrzeug-Sicherheitsgurtanordnung nach Anspruch 5, **dadurch gekennzeichnet, dass** die Einrichtung (33, 34, 32) ein Gurtband (33) umfasst, das mit dem Schenkelgurtabschnitt (9) und einer Feder-vorgespannten Gurtbandspule (34) verbunden ist, zum Drängen des Schenkelgurtabschnitts (9) in eine im Allgemeinen rückwärtige Richtung in dem Fahrzeug.

7. Fahrzeug-Sicherheitsgurtanordnung nach einem der vorhergehenden Ansprüche, **dadurch gekennzeichnet, dass** sie ein Gehäuse (22) zum Aufnehmen des Distanzelements (13; 13') umfasst, wobei das Gehäuse (22) eine Sicherheitsgurtschnalle (23) umfasst, zum Verriegeln mit einer Verbindungsstelle (24), die in dem Fahrzeug angeordnet ist.

8. Fahrzeug-Sicherheitsgurtanordnung nach einem der vorhergehenden Ansprüche, **dadurch gekennzeichnet, dass** die Spule (10) für den Rumpfgurtabschnitt (8) und/oder die Spule (12) für den Schenkelgurtabschnitt (9) eine Vorspannungsvorrichtung umfasst, zum Ausüben einer Zurückhaltekraft im Falle eines kollisionsartigen Zustands des Fahrzeugs.

## Revendications

1. Dispositif de ceinture de sécurité de véhicule comprenant une sangle de ceinture définissant une section de ceinture de torse (8) ayant une première partie d'extrémité (8a) agencée dans un dévidoir (10) et une seconde partie d'extrémité (8b), ladite sangle de ceinture définissant également une section de ceinture de cuisses (9) ayant une première partie d'extrémité (9a) agencée dans un dévidoir (12) et une seconde partie d'extrémité (9b), **caractérisé en ce que** ladite sangle de ceinture se compose uniquement de ladite section de ceinture de torse (8) et ladite section de ceinture de cuisses (9), et **en ce que** lesdites secondes parties d'extrémité (8b, 9b) sont raccordées via un élément d'éloignement (13 ; 13') qui, pendant l'utilisation, s'étend généralement dans la direction longitudinale dudit véhicule, maintenant ainsi ladite seconde partie d'extrémité (8b) de la section de ceinture de torse (8) à une distance prédéterminée de ladite seconde partie d'extrémité (9b) de la section de ceinture de cuisses (9).

2. Dispositif de ceinture de sécurité de véhicule selon la revendication 1, **caractérisé en ce que** ledit élément d'éloignement (13) est constitué par un fil (13) qui est fixé à ladite seconde partie d'extrémité (8b) de la section de ceinture de torse (8) et à ladite seconde partie d'extrémité (9b) de la section de ceinture de cuisses (9).

3. Dispositif de ceinture de sécurité de véhicule selon la revendication 2, **caractérisé en ce que** ledit fil (13) s'étend à travers un premier élément généralement en forme de boucle (18) définissant le positionnement pour ladite seconde partie d'extrémité (8b) de la section de ceinture de torse (8) et à travers un second élément généralement en forme de boucle (20) définissant le positionnement pour ladite seconde partie d'extrémité (9b) de la section de ceinture de cuisses (9).

4. Dispositif de ceinture de sécurité de véhicule selon la revendication 1, **caractérisé en ce que** ledit élément d'éloignement (13') est constitué par une tige de translation (13') ayant une rainure généralement hélicoïdale (35) pour loger un élément de sangle (36) reliant ladite seconde partie d'extrémité (8b) de la section de ceinture de torse (8) et ladite seconde partie d'extrémité (9b) de la section de ceinture de cuisses (9).

5. Dispositif de ceinture de sécurité de véhicule selon l'une quelconque des revendications précédentes, **caractérisé en ce qu'**il comprend des moyens (33, 34, 32) pour exercer une force sur ladite section de ceinture de cuisses (9) pour son positionnement général sur le côté supérieur des cuisses (7) d'un utilisateur (1), à proximité du ventre de l'utilisateur (1).

6. Dispositif de ceinture de sécurité de véhicule selon la revendication 5, **caractérisé en ce que** lesdits moyens (33, 34, 32) comprennent une sangle de ceinture (33) qui est raccordée à ladite section de ceinture de cuisses (9) et un dévidoir de sangle de ceinture à ressort (34) pour pousser ladite section de ceinture de cuisses (9) dans une direction généralement vers l'arrière dans ledit véhicule.

7. Dispositif de ceinture de sécurité de véhicule selon l'une quelconque des revendications précédentes, **caractérisé en ce qu'**il comprend un boîtier (22) pour loger ledit élément d'éloignement (13 ; 13'), ledit boîtier (22) comprenant une boucle de ceinture de sécurité (23) pour se verrouiller sur un site de raccordement (24) agencé dans ledit véhicule.

8. Dispositif de ceinture de sécurité de véhicule selon l'une quelconque des revendications précédentes, **caractérisé en ce que** le dévidoir (10) pour la section de ceinture de torse (8) et/ou le dévidoir (12) pour la section de ceinture de cuisses (9) comprend un dispositif de pré-tension pour exercer une force de retenue dans le cas d'une condition de collision dudit véhicule.
